# EUROPÄISCHE PATENTSCHRIFT

(11) **EP 3 423 269 B1**
(45) Veröffentlichungstag und Bekanntmachung des Hinweises auf die Patenterteilung: **09.09.2020**
(21) Anmeldenummer: 17707497.8
(22) Anmeldetag: 17.02.2017
(51) Int. Cl.: B32B 5/02, B32B 5/06, B32B 5/08, B32B 27/12, B32B 27/32, B32B 27/34, B32B 3/26, G10K 11/00

(54) **MEHRLAGIGER AKUSTIK- UND/ODER VERSTEIFUNGSVLIESSTOFF**
MULTI-LAYER ACOUSTIC AND/OR REINFORCING NON-WOVEN FABRIC
NON-TISSÉ MULTICOUCHE ACOUSTIQUE ET/OU DE RENFORT

(30) Priorität: 01.03.2016 DE 102016203348
(43) Veröffentlichungstag der Anmeldung: 09.01.2019
(73) Patentinhaber: Adler Pelzer Holding GmbH, 58099 Hagen (DE)
(72) Erfinder: SCHULZE, Volkmar, 84069 Schierling (DE); NICOLAI, Norbert, 46514 Schermbeck-Gahlen (DE); VOLLMERT, Herbert, 47475 Kamp-Lintfort (DE); ZIKMUND, Ctirad, 33824 Brasy (CZ); SCHNEIDER, Marco, 45239 Essen (DE); PIATKOWSKI, Reimund, 44143 Dortmund (DE)
(74) Vertreter: dompatent von Kreisler Selting Werner - Partnerschaft von Patent- und Rechtsanwälten mbB
(86) Internationale Anmeldenummer: PCT/EP2017/053617
(87) Internationale Veröffentlichungsnummer: WO 2017/148711

(56) Entgegenhaltungen:
- WO-A1-2014/082869
- DE-B3-102006 005 369

## Beschreibung

Gegenstand der Erfindung ist ein mehrlagiger Akustik- und/oder Versteifungsvliesstoff.

Als ein Ausgangspunkt für die Nutzung des Begriffs "Vliesstoff" als Synonym für einen Akustik- und/oder Versteifungsvliesstoff kann sicherlich die DE 1062206 C angesehen werden. Daraus ist zu entnehmen, dass man als Endprodukte, die durch das Aufbringen von filmbildenden Verklebungsmitteln auf Basis wässriger Dispersionen auf Faservliese aus Synthese- und Naturfasern und durch anschließendes Trocknen bei erhöhter Temperatur hergestellt werden, sogenannte Vliesstoffe erhält. Vorher wurden die mittels Bindemittel verklebten Faservliese als imprägnierte faserartige Stoffe, kunstlederartige Flächengebilde oder gummierte faserhaltige Flächengebilde und Ähnliches. Bezeichnet; die durch Vernadeln verfestigten Faservliese als Nadelfilze. Die aus Schichten von Vliesen aufgebauten Produkte zählen zu den Vliesstoffen und nicht zu den Watten, wenn nicht nur eine oberflächliche, sondern auch im Inneren eine weitgehende Verfestigung erfolgt oder wenn zwar vorzugsweise nur die oberflächennahen Schicht, aber dafür vollständig und gleichmäßig verfestigt und geglättet ist. Für die Unterscheidung von Filzen und Vliesstoffen wird auf die DIN 61 205 (2006 ohne Ersatz zurückgezogen) verwiesen, in der für die Unterscheidung zwischen Filz und vernadeltem Filz (Nadelfilz) bzw. vernadeltem Vliesstoff (Nadelvliesstoff) bei ersterem die notwendige Verwendung von filzbaren Fasern genannt wird. Eine Unterscheidung zwischen Nadelfilz und Nadelvliesstoff wird anhand der Dichte vorgenommen. Erzeugnisse mit einer Dichte <0,15 g/cm³ werden danach zu den Vliesstoffen gerechnet, alle mit gleicher oder höherer Dichte zu den Nadelfilzen.

Diese Unterscheidung in Nadelfilz und Nadelvliesstoff wurde in der Nachfolge-Norm DIN EN 29 092:1992 nicht mehr vorgenommen. Es wurden nur noch durch Nasswalken hergestellte Filze von den Vliesstoffen ausgenommen. Noch weiter geht die neueste für die Definition von Vliesstoffe gültige Norm DIN EN ISO 9092.

Die Verfahren der Vliesverfestigung, d.h. die Umwandlung eines Faservlieses in einen Vliesstoff durch das Erzeugen eines festeren Verbundes zwischen den Fasern als er im Vlies vorliegt, werden meist in mechanische, chemische und thermische unterteilt.
- Bei den mechanischen Verfestigungsverfahren wird der Verbund der Fasern durch Reibschluss oder durch eine Kombination von Reib- und Formschluss hergestellt.
   ∘ Bei der Reibschluss-Bindung wird durch eine Vliesverdichtung der Abstand der benachbarten Fasern gegenüber dem im Vlies verringert. Damit wird die Haftung der Fasern aneinander erhöht und es können höhere Kräfte übertragen werden. Der Widerstand des Vlieses gegen Verformung wird höher; es wird fester. Erreicht werden kann die Verdichtung durch Schrumpfen aller Fasern oder eines Anteils, wenn die Fasern schrumpffähig bei Einwirkung von Wärme und/oder einem Quellmittel sind. Es entstehen Schrumpfvliesstoffe oder Quellvliesstoffe. Ebenso kann das Verdichten durch Pressen (meistens Kalandern) oder durch Walken erfolgen, bei welchem die Fasern des Vlieses filzfähig sein müssen und durch gleichzeitige thermische, chemische und mechanische Einwirkungen untereinander verfilzen. Durch das Walken entstehen Filze bzw. Walkvliesstoffe.
   ∘ Bei den durch Kombination von Reib- und Formschlussbindung erzeugten Vliesstoffen werden die Fasern des Vlieses durch mechanische Einwirkungen miteinander verschlungen.
      ▪ Dieses Verschlingen der Fasern und damit das Verdichten und Verfestigen des Vlieses kann durch Vernadeln erfolgen, in dem eine Vielzahl von speziellen, in einem Nadelbett oder - balken angeordneten Nadeln (Widerhakennadeln, Gabelnadeln) ein- und ausgestochen wird. Es entstehen Nadelvliesstoffe. Diese Art der Verfestigung kann sowohl für Vliese aus Spinnfasern oder Endlosfasern erfolgen.
      ▪ Bei der Verwendung von Schiebernadeln zum Durchstechen des Vlieses können Faserbüschel "vermascht" werden, d. h. sie nehmen schlingenförmige Anordnungen ("Maschen") ein. Dazu werden Querlagevliese aus Spinnfasern verwendet. Durch das Faser-Vlieswirkverfahren entstehen Faservliesstoffe wie z. B. Malivlies (Wikipedia, Stichwort Vliesstoff, 11.02.2016).

Nach DIN 61 210 werden Vliesstoffe als "Flächengebilde, die ganz oder zu einem wesentlichen Teil aus Fasern bestehen", definiert. Die den Vliesstoffcharakter bestimmenden Fasern "sind wirr oder in bestimmten Richtungen orientiert angeordnet". Die Verbindung zwischen den einzelnen Fasern erfolgt formschlüssig (Verschlingung) oder kraftschlüssig (Verklebung). (Burkhard Wulfhorst, Textile Fertigungsverfahren, München, Wien: Hanser 1998, S. 167 bis 186).

In Kraftfahrzeugen werden insbesondere im Fahrgastraum und Gepäckraum thermoformbare Akustik- und/oder Versteifungsvliesstoffe eingesetzt. Meist sind dies locker verpresste duroplastisch oder thermoplastisch gebundene Textilfaservliesstoffe sowie Kombinationen von Schaumstoff- und / oder Vliesstoffschichten mit gleichen oder verschiedenen Strömungswiderständen. Darüber hinaus finden auch sogenannte Strömungsvliesstoffe Anwendung, um zielgerichtet die Akustik zu tunen. Zur Beeinflussung des Schallschluckvermögens in Korrelation mit der Trittsteifigkeit werden bei Bodenverkleidungen poröse, luft- und damit schalloffene Schichten zwischen der eigentlichen Oberware und den prozessbedingten Dicht- und Schwerschichten beziehungsweise der Isolation eingefügt. Als poröse, luft- und damit schalloffene Schichten finden hier Polyester- und Mischfaservliese Anwendung. Die Trittfestigkeit wird durch den Anteil an Bikomponentenfasern (BiCo) in den Vliesstoffen beeinflusst.

Bei Stirnwand-Materialstrukturen finden häufig einlagige Vliesstoffe, mehrschichtige Vliesstoffe und hinterschäumte Vliesstoffe Anwendung.

Vorwiegend bei Seitenverkleidungen, Heckklappenverkleidungen und Reserveradmulden finden auch Vliesstoffe und/oder Vliesstoffkombinationen im Gepäckraum ihre Anwendung.

DE 10 2007 033 635 A1 beschreibt ein Vliesstoff-Formteil für Fahrzeuge. Bei einem Vliesstoff-Formteil geht man von einem Vliesstoff-Halbzeug aus, welches aus mehreren übereinander liegenden Florlagen besteht, die zueinander unterschiedlich ausgebildet sind. Jede Florlage ist aus einer Mischung von strukturbildenden Fasern einerseits und matrixbildenden Fasern andererseits aufgebaut. Bei einer Wärmebehandlung mit definierter Temperatur schmelzen nur die matrixbildenden Fasern, nicht aber die strukturbildenden Fasern. Um die mechanischen und akustischen Eigenschaften des Formteils zu verbessern wird vorgeschlagen, die matrixbildenden Fasern mindestens in jener Florlage, welchem im späteren Gebrauchsfall die Abseite des fertigen Formteil erzeugt, mit einer niedrigeren Schmelzviskosität und/oder einem größeren Schmelzindex zu versehen, als die anderen Florlagen.

WO 2007/090479A1 betrifft ein Verfahren zur Herstellung von Schall absorbierenden Formteilen, insbesondere zur Verwendung als Kraftfahrzeug-Stirnwandverkleidungen oder als Unterware für Kraftfahrzeug-Teppiche. Das Verfahren umfasst im wesentlichen folgende Schritte: pneumatisches Aufbringen von verschiedenen Materialien wenigstens umfassend neu hergestellte und/oder recyclierte thermoplastische Schmelzfasern, recyclierte Schaumstoffteilchen und recyclierte Schwerschichtteilchen, auf einen Bandförderer oder eine Fläche in der Weise, dass aus den Materialien ein mattenförmiges Flächengebilde entsteht, Erhitzen und Pressen des erhitzten Flächengebildes, wobei vorbestimmte Bereiche des Flächengebildes unterschiedlich stark verdichtet werden.

TR 200803410 betrifft ein Verfahren zur Wiederverwendung von relativ groben Abfallmaterialien, beispielsweise von Textilabfällen aus dem Herstellungsverfahren von Automobilteilen sowie Produkte die daraus hergestellt werden. Das Verfahren ist dadurch gekennzeichnet, dass man die Abfallmaterialien in relativ kleine Stücke bricht. Dieses Mahlgut wird dann auf eine Unterlage aufgebracht. Anschließend wird eine obere Lage eines weiteren Rohmaterials auf die Oberfläche des Abfallmaterials aufgebracht und die Schichten miteinander verbunden. In TR 200906997 wird ein analoges Verfahren beschrieben, bei dem zusätzlich noch eine weitere Hartschicht eingebracht wird.

WO 2014/082869 A1 **offenbart einen mehrlagigen vernadelten Akustik- und/oder Versteifungsvliesstoff umfassend zwei äußere Deckvliesstoffe, wobei beide Deckvliesstoffe jeweils ein PP/PET-Deckvliesstoff mit einem Flächengewicht von 100 g/m² bis 250 g/m² sind, mit einer jeweils zwischen den Deckvliesstoffen liegenden Schicht aus Mahlgut mit einem Flächengewicht von 350 g/m² bis 800 g/m² aus PET.**

Die Aufgabe der vorliegenden Erfindung besteht dem gegenüber in der Bereitstellung eines mehrlagigen Akustik- und/oder Versteifungsvliesstoffes insbesondere für den Bereich von Kraftfahrzeugen mit hervorragenden akustischen Eigenschaften unter Einsatz von an sich bekanntem Mahlgut aus der Herstellung von Fasern enthaltenen Gegenständen im Kraftfahrzeugsektor zusammen mit entsprechenden thermoplastischen Staubabfällen, die bisher keine Verwendung fanden.

Die vorgenannte Aufgabe wird in einer ersten Ausführungsform gelöst durch einen mehrlagigen vernadelten Akustik-und/oder Versteifungsvliesstoff umfassend zwei äußere Deckvliesstoffe nämlich
a) einen ersten Deckvliesstoff bestehend aus einem PE-Klebevliesstoff mit einem Flächengewicht von 30 g/m² bis 200 g/m², vorzugsweise von 50 g/m² bis 150 g/m², und einen zweiten Deckvliesstoff bestehend aus einem PP/PET-Vliesstoff mit einem Flächengewicht von 50 g/m² bis 250 g/m², vorzugsweise von 80 g/m² bis 200g/m² umfassen oder
b) beide Deckvliesstoffe jeweils ein PP/PET-Deckvliesstoff mit einem Flächengewicht von 100 g/m² bis 800 g/m², vorzugsweise 300 g/m² bis 600 g/m² sind,
jeweils mit einer zwischen den äußeren Deckvliesstoffen liegenden Schicht aus Mahlgut mit einem Flächengewicht von 250 g/m² bis 700 g/m² aus PE, PET, PP, Mehrkomponenten(BiCo)-Fasermaterial,
der dadurch gekennzeichnet ist, dass
das Mahlgut 5 Gew. % bis 50 Gew. %, vorzugsweise 10 Gew. % bis 40 Gew. %, bezogen auf das Mahlgut- Staubabfälle aus Reißbaumwolle, PET und Mehrkomponenten(BiCo)-Fasern enthält.

PE steht dabei für ein Polyethylenhomopolymer, gegebenenfalls für ein Polyethylencopolymer mit überwiegendem Anteil an Polyethylen.
PP steht dabei für ein Polypropylenhomopolymer, gegebenenfalls für ein Polypropylencopolymer mit überwiegendem Anteil an Polypropylen.
PET steht dabei für ein Polyester, insbesondere für ein Polyethylenterephthalat.

BiCo steht dabei für Zwei- oder Mehrkomponentenfasern.
Wesentliches Merkmal der vorliegenden Erfindung ist somit der Einsatz von Staub bzw. Staubabfällen aus der Herstellung von textilen und nichttextilen Herstellung insbesondere von Kraftfahrzeugteilen, die bisher keiner Wiederverwertung, sondern der Entsorgung (beispielsweise der Verbrennung) zugeführt wurden

Eine weitere bevorzugte alternative Ausführungsform der vorliegenden Erfindung besteht in einem mehrlagigen vernadelten Akustik-und/oder Versteifungsvliesstoff, der dadurch gekennzeichnet ist, dass zwischen dem -in Nadelrichtung- oberen Deckvliesstoff und der Schicht aus Mahlgut/Staub eine PE/PA/PE-Folie mit einer Gesamtdicke von 40 µm bis 150 µm, insbesondere von 60 µm bis 100 µm angeordnet ist.

Eine weitere bevorzugte Ausführungsform der vorliegenden Erfindung besteht auch in einem mehrlagigen vernadelten Akustik- und/oder Versteifungsvliesstoff, der dadurch gekennzeichnet ist, dass zwischen dem -in Nadelrichtung- oberen Deckvliesstoff plus der Schicht aus Mahlgut/Staub und unterem Deckvliesstoff eine PE/PA/PE-Folie mit der Gesamtdicke von 40µm bis 150µm, insbesondere von 60 mm bis 100 µm angeordnet ist.

Besonders bevorzugt im Sinne der vorliegenden Erfindung ist ein mehrlagiger Akustik- und/oder Versteifungsvliesstoff, der dadurch gekennzeichnet ist, dass einer der Deckvliesstoffe ein Folienvliesstoff aus PET-PE/PA/PE umfasst und dessen PE-Seite dem Mahlgut zugewandt ist.

Weiterhin bevorzugt im Sinne der vorliegenden Erfindung ist ein mehrlagiger Akustik- und/oder Versteifungsvliesstoff, der dadurch gekennzeichnet ist, dass beide Deckvliesstoffe jeweils einen Folienvliesstoff aus PET-PE/PA/PE umfassen und dessen PE-Seiten jeweils dem Mahlgut zugewandt sind.

Darüber hinaus ist im Sinne der vorliegenden Erfindung ein mehrlagiger Akustik- und/oder Versteifungsvliesstoff bevorzugt, der dadurch gekennzeichnet ist, dass die PE/PA/PE-Folie bzw. der Folienvliesstoff aus PET-PE/PA/PE bei der Vernadelung (in-line) des Gesamtverbundes mikroperforiert wird.

Weiterhin ist Gegenstand der vorliegenden Erfindung ein entsprechendes Verfahren zur Herstellung eines mehrlagigen Akustik- und/oder Versteifungsvliesstoffes wie oben definiert, das dadurch gekennzeichnet ist, dass man das oben definierte Mahlgut mit einer Korngröße im Bereich von 1 mm bis 8 mm, insbesondere von 2mm bis 3mm, welches die Staubabfälle mit einer Korngröße von 1 µm bis 1 mm aufweist auf den ersten Deckvliesstoff aufstreut und anschließend den zweiten Deckvliesstoff aufbringt, insbesondere darüberfährt, den Gesamtverbund verdichtet und vernadelt.

Ein besonders bevorzugtes Verfahren im Sinne der vorliegenden Erfindung ist dadurch gekennzeichnet, dass zusätzlich eine PE/PA/PE-Folie unter dem oberen Deckvliesstoff oder auf dem unteren Deckvliesstoff zugefahren wird, und durch die Vernadelung des Gesamtverbundes in-line die PE/PA/PE-Folie mikroperforiert wird.

Beispiele, nicht erfindungsgemäß :
In einer ersten Anwendung wurden 500 g/m² Mahlgut, enthaltend PET, PP und/oder, PET/coPET-Zweikomponenten-Fasern auf einer Partikelgröße von 2mm gemahlen, und 20 Gew.% -bezogen auf das Mahlgut- Staubabfälle zwischen einen PP/PET-Vliesstoff von 150 g/m² einerseits und einen PE-Klebevliesstoff von 70 g/m² andererseits gestreut und dieser Verbund vernadelt.

In einer Thermoverformungsanlage -Ablagetisch, Kontaktheizfeld 1, Kontaktheizfeld 2, Verformungswerkzeug- wurde dieser Vliesstoff mit einem handelsüblichen Dilour-Teppich (560 g/m² PET, 80 g/m² Latex, 80 g/m² PE-Beschichtung) kaschiert und zu einer Bodenverkleidung verformt.
Der PE-Klebevliesstoff lag hierbei zu der PE-Teppichbeschichtung.
Bei der anschließenden Prüfung der Bodenverkleidung entsprechend der Spezifikation, zeigte der Gesamtverbund insbesondere hinsichtlich Biegesteifigkeit gegenüber einem (virgin) PET-Vliesstoff verbesserte Eigenschaften.

In einer zweiten Anwendung wurde insbesondere der Einstellung der Strömungswiderstandes Rechnung getragen.

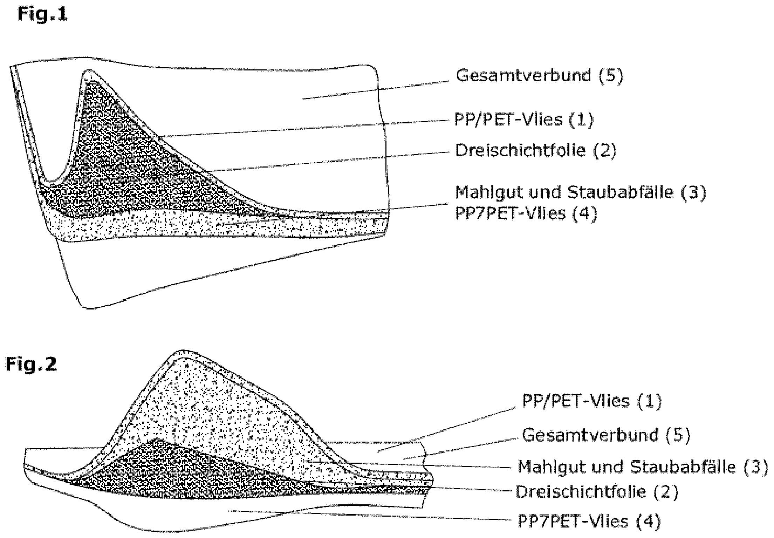

Zum einen wurde die folgende Materialstruktur (Fig. 1) hergestellt: 200g/m² PP/PET-Deckvliesstoff 1, Dreischichtfolie (PE/PA/PE) 2, Mahlgut aus PET, PP, PET/coPET-Zweikomponenten-Fasern 3 in einer Partikelgröße von 2mm gemahlen und 30 Gew. % -bezogen auf das Mahlgut- Staubabfälle 3, 100 g/m² PP/PET-Vliesstoff 4. Dieser Gesamtverbund 5 wurde vernadelt, wobei durch diesen Prozessschritt die Dreischichtfolie 2 mikroperforiert wird.

In einer Thermoverformungsanlage -Ablagetisch, Kontaktheizfeld 1, Kontaktheizfeld 2, Verformungswerkzeug- wurde auch dieser Vliesstoff 5 mit einem Dilour-Teppich (560 g/m² PET, 80 g/m² Latex, 80 g/m² PE-Beschichtung) kaschiert und zu einer Bodenverkleidung verformt.

Der Strömungswiderstand des Gesamtverbunds aus Diluor-Teppich plus Vliesstoff 5, betrug 1004514 Ns/m-⁴.

Zum anderen wurde die folgende Materialstruktur (Fig. 2) hergestellt: 200g/m² PP/PET-Deckvliesstoff 1, Mahlgut aus PET, PP, PET/coPET-Zweikomponenten-Fasern 3 in einer Partikelgröße von 2mm gemahlen und 30 Gew. % -bezogen auf das Mahlgut- Staubabfälle 3, Dreischichtfolie (PE/PA/PE) 2 und 100 g/m² PP/PET-Vliesstoff 4. Dieser Gesamtverbund 5 wurde vernadelt, wobei durch diesen Prozessschritt die Dreischichtfolie 2 mikroperforiert wird.

In einer Thermoverformungsanlage -Ablagetisch, Kontaktheizfeld 1, Kontaktheizfeld 2, Verformungswerkzeug- wurde auch dieser Vliesstoff 5 mit einem Dilour-Teppich (560 g/m² PET, 80 g/m² Latex, 80 g/m² PE-Beschichtung) kaschiert und zu einer Bodenverkleidung verformt.

Der Strömungswiderstand aus Diluor-Teppich plus Vliesstoff 5, betrug 526222 Ns/m⁻⁴.

Durch die unterschiedliche Anordnung der Dreischichtfolie 2, deren Mikroperforierung (inline) im Vernadelungsprozess des Gesamtverbundes 5, damit der Korrelation Perforierung (offener Lochanteil) - Mahlgut 3, ist der Strömungswiderstand beeinflussbar.

## Patentansprüche

1. Mehrlagiger vernadelter Akustik- und/oder Versteifungsvliesstoff (5) umfassend zwei äußere Deckvliesstoffe (1 und 4) nämlich
a) einen ersten Deckvliesstoff bestehend aus einem PE-Klebevliesstoff mit einem Flächengewicht von 30 g/m² bis 200 g/m², vorzugsweise von 50 g/m² bis 150 g/m², und einen zweiten Deckvliesstoff (4) bestehend aus einem PP/PET-Vliesstoff mit einem Flächengewicht von 50 g/m² bis 250 g/m², vorzugsweise von 80 g/m² bis 200g/m² umfassen oder
b) beide Deckvliesstoffe (1 und 4) jeweils ein PP/PET-Deckvliesstoff mit einem Flächengewicht von 100 g/m² bis 800 g/m², vorzugsweise 300 g/m² bis 600 g/m² sind,
mit einer jeweils zwischen den Deckvliesstoffen (1 und 4) liegenden Schicht aus Mahlgut (3) mit einem Flächengewicht von 250 g/m² bis 700 g/m² aus PE, PET, PP, Zweikomponenten-Fasern und Mehrkomponentenfasermaterial,
**dadurch gekennzeichnet, dass**
das Mahlgut (3) 5 Gew. % bis 50 Gew. %, vorzugsweise 10 Gew. % bis 40 Gew. %, bezogen auf das Mahlgut- Staubabfälle (3) aus Reißbaumwolle, PET und Zweikomponenten-Fasern enthält.

2. Mehrlagiger vernadelter Akustik- und/oder Versteifungsvliesstoff (5) nach Anspruch 1, **dadurch gekennzeichnet, dass** zwischen dem -in Nadelrichtungoberen Deckvliesstoff (1) und der Schicht aus Mahlgut/Staub (3) eine PE/PA/PE-Folie (2) mit einer Gesamtdicke von 40 µm bis 150 µm, insbesondere von 60 µm bis 100 µm angeordnet ist.

3. Mehrlagiger vernadelter Akustik-/Versteifungsvliesstoff (5) nach Anspruch 1 oder 2, **dadurch gekennzeichnet, dass** zwischen dem -in Nadelrichtung- oberen Deckvliesstoff (1) plus der Schicht aus Mahlgut/Staub (3) und unterem Deckvliesstoff (4) eine PE/PA/PE-Folie (2) mit einer Gesamtdicke von 40 µm bis 150 µm, insbesondere von 60 µm bis 100 µm angeordnet ist.

4. Mehrlagiger Akustik- und/oder Versteifungsvliesstoff (5) nach einem der Ansprüche 1 bis 3, **dadurch gekennzeichnet, dass** wenigstens einer oder beide Deckvliesstoffe (1 oder 4) ein Folienvliesstoff aus PET-PE/PA/PE umfassen, deren PE-Seite dem Mahlgut zugewandt ist.

5. Mehrlagiger Akustik- und/oder Versteifungsvliesstoff (5) nach einem der Ansprüche 1 bis 4, **dadurch gekennzeichnet, dass** die PE/PA/PE-Folie (2) und/oder der Folienvliesstoff aus PET-PE/PA/PE mikroperforiert ist.

6. Verfahren zur Herstellung eines mehrlagigen Akustik- und/oder Versteifungsvliesstoffes (5) nach einem der Ansprüche 1 bis 5, **dadurch gekennzeichnet, dass** man das Mahlgut (3) mit einer Korngröße im Bereich von 1 mm bis 8 mm, insbesondere von 2mm bis 3mm und die Staubabfälle (3) mit einer Korngröße von 1 µm bis 1 mm auf den ersten Deckvliesstoff (4) aufstreut und anschließend den zweiten Deckvliesstoff (1) darüberfährt, den Gesamtverbund (5) verdichtet, und vernadelt.

7. Verfahren nach Anspruch 6, **dadurch gekennzeichnet, dass** man zusätzlich wenigstens eine PE/PA/PE-Folie (2) unter dem oberen Deckvliesstoff (1) oder auf dem unteren Deckvliesstoff (4) zufährt und durch die Vernadelung des Gesamtverbundes (5) (in-line) die PE/PA/PE-Folie (2) mikroperforiert.

## Claims

1. A multi-layer needle-punched acoustic and/or reinforcing non-woven fabric (5) comprising two outer cover non-woven fabrics (1 and 4), namely:
a) a first cover non-woven fabric consisting of a PE adhesive non-woven fabric with a basis weight of 30 g/m² to 200 g/m², preferably from 50 g/m² to 150 g/m², and a second cover non-woven fabric (4) consisting of a PP/PET non-woven fabric with a basis weight of 50 g/m² to 250 g/m², preferably from 80 g/m² to 200 g/m², or
b) both cover non-woven fabrics (1 and 4) are a PP/PET cover non-woven fabric with a basis weight of 100 g/m² to 800 g/m², preferably from 300 g/m² to 600 g/m²;
each containing a layer sandwiched between the outer cover non-woven fabrics (1 and 4) and consisting of a ground material (3) with a basis weight of 250 g/m² to 700 g/m² of PE, PET, PP, multicomponent (BiCo) fibrous material;
**characterized in that**
said ground material (3) contains from 5% by weight to 50% by weight, preferably from 10% by weight to 40% by weight, based on the ground material, of dust scraps (3) of reclaimed cotton, PET and bicomponent fibers.

2. The multi-layer needle-punched acoustic and/or reinforcing non-woven fabric (5) according to claim 1, **characterized in that** a PE/PA/PE sheet (2) with a total thickness of 40 µm to 150 µm, especially from 60 µm to 100 µm, is provided between the top, in the direction of needle punching, cover non-woven fabric (1) and the layer of ground material/dust (3).

3. The multi-layer needle-punched acoustic/reinforcing non-woven fabric (5) according to claim 1 or 2, **characterized in that** a PE/PA/PE sheet (2) with a total thickness of 40 µm to 150 µm, especially from 60 µm to 100 µm, is provided between the top, in the direction of needle punching, cover non-woven fabric (1) plus the layer of ground material/dust (3), and the bottom cover non-woven fabric (4).

4. The multi-layer acoustic and/or reinforcing non-woven fabric (5) according to any of claims 1 to 3, **characterized in that** at least one or both the cover non-woven fabrics (1 or 4) comprise a sheet non-woven fabric of PET-PE/PA/PE whose PE side faces towards the ground material.

5. The multi-layer acoustic and/or reinforcing non-woven fabric (5) according to any of claims 1 to 4, **characterized in that** said PE/PA/PE sheet (2) and/or said sheet non-woven fabric of PET-PE/PA/PE is microperforated.

6. A process for producing a multi-layer acoustic and/or reinforcing non-woven fabric (5) according to any of claims 1 to 5, **characterized in that** the ground material (3) having a grain size within a range of from 1 mm to 8 mm, especially from 2 mm to 3 mm, and the dust scraps (3) having a grain size of from 1 µm to 1 mm are scattered onto the first cover non-woven fabric (4), and subsequently the second cover non-woven fabric (1) is fed on top, the total composite (5) is compacted, and needle-punched.

7. The process according to claim 6, **characterized in that** at least one PE/PA/PE sheet (2) is additionally fed below the top cover non-woven fabric (1) or above the bottom cover non-woven fabric (4), and said PE/PA/PE sheet (2) is microperforated (in line) by the needle-punching of the total composite (5).

## Revendications

1. Tissu non tissé acoustique et/ou de renforcement, aiguilleté, à plusieurs couches (5), comprenant deux tissus non tissés couvrants extérieures (1 et 4), à savoir
a) un premier tissu non tissé couvrant consistant en un tissu non tissé adhésif en PE ayant un grammage de 30 g/m² à 200 g/m², de préférence de 50 g/m² à 150 g/m², et un second tissu non tissé couvrant (4) consistant en un tissu non tissé adhésif en PP/PET ayant un grammage de 50 g/m² à 250 g/m², de préférence de 80 g/m² à 200 g/m², ou
b) les deux tissus non tissés couvrants (1 et 4) sont chacun un tissu non tissé couvrant en PP/PET ayant un grammage de 100 g/m² à 800 g/m², de préférence de 300 g/m² à 600 g/m²,
comprenant une couche positionnée respectivement entre les tissus non tissés couvrants (1 et 4) et consistant en un produit broyé (3) ayant un grammage de 250 g/m² à 700 g/m² et consistant en PE, PET, PP, fibres à deux composants, et un matériau fibreux à plusieurs composants,
**caractérisé en ce que**
ledit produit broyé (3) contient de 5 % en poids à 50 % en poids, de préférence de 10 % en poids à 40 % en poids, par rapport audit produit broyé, de déchets poussiéreux (3) consistant en coton recyclé, PET et fibres à deux composants.

2. Tissu non tissé acoustique et/ou de renforcement, aiguilleté, à plusieurs couches (5) selon la revendication 1, **caractérisé en ce qu'**une feuille de PE/PA/PE (2) ayant une épaisseur totale de 40 µm à 150 µm, notamment de 60 µm à 100 µm, est disposée entre le tissu non tissé couvrant supérieur (1), dans la direction d'aiguilletage, et la couche de produit broyé/poussière (3).

3. Tissu non tissé acoustique/de renforcement, aiguilleté, à plusieurs couches (5) selon la revendication 1 ou 2, **caractérisé en ce qu'**une feuille de PE/PA/PE (2) ayant une épaisseur totale de 40 µm à 150 µm, notamment de 60 µm à 100 µm, est disposée entre le tissu non tissé couvrant supérieur (1), dans la direction d'aiguilletage, plus la couche de produit broyé/poussière (3) et le tissu non tissé couvrant inférieur (4).

4. Tissu non tissé acoustique et/ou de renforcement à plusieurs couches (5) selon l'une quelconque des revendications 1 à 3, **caractérisé en ce qu'**au moins un ou les deux tissus non tissés couvrants (1 ou 4) comprend/comprennent un tissu non tissé en feuilles en PET-PE/PA/PE dont le côté de PE est orienté vers le produit broyé.

5. Tissu non tissé acoustique et/ou de renforcement à plusieurs couches (5) selon l'une quelconque des revendications 1 à 4, **caractérisé en ce que** ladite feuille de PE/PA/PE (2) et/ou ledit tissu non tissé en feuilles en PET-PE/PA/PE est microperforé.

6. Procédé pour fabriquer un tissu non tissé acoustique et/ou de renforcement à plusieurs couches (5) selon l'une quelconque des revendications 1 à 5, **caractérisé en ce que** ledit produit broyé (3) ayant une granulométrie comprise entre 1 mm et 8 mm, notamment entre 2 mm et 3 mm, et lesdits déchets poussiéreux (3) ayant une granulométrie comprise entre 1 µm et 1 mm sont épandus sur ledit premier tissu non tissé couvrant (4), ensuite ledit second tissu non tissé couvrant (1) est appliqué dessus, le composite total (5) est densifié, et aiguilleté.

7. Procédé selon la revendication 6, **caractérisé en ce qu'**au moins une feuille de PE/PA/PE (2) est ajoutée en outre sous ledit tissu non tissé couvrant supérieur (1) ou sur ledit tissu non tissé couvrant inférieur (4), et la feuille de PE/PA/PE (2) est microperforée par l'aiguilletage dudit composite total (5) (en ligne).
